# EUROPÄISCHE PATENTANMELDUNG

(11) **EP 1 890 480 A2**
(43) Veröffentlichungstag der Anmeldung: **20.02.2008**
(21) Anmeldenummer: 07112119.8
(22) Anmeldetag: 10.07.2007
(51) Int. Cl.: H04N 5/225

(54) **Kamera für ein Fahrzeug**

(30) Priorität: 18.08.2006 DE 102006038827
(71) Anmelder: ROBERT BOSCH GMBH, 70442 Stuttgart (DE)
(72) Erfinder: Franz, Gerald, 71522 Backnang (DE)

(57) **Zusammenfassung**

Die Erfindung betrifft eine Kamera für ein Fahrzeug, die aufweist:
genau eine Linse (2) mit einer konvexen Vorderfläche (2.1) und einer konkaven Hinterfläche (2.2),
mindestens ein biplanares optisches Element (3) mit einer planaren Vorderseite (3.1) und
einer planaren Hinterseite (3.2),
einen Bildsensor (5) zur Ausgabe eines Bildsignals (B), und
ein Gehäuse (6) zur Aufnahme der Linse (2), des mindestens einen biplanaren optischen Elementes (3) und des Bildsensors (5),

wobei eine Anlagefläche (2.3) der Rückseite der Linse (2) an der Vorderseite (3.1) des mindestens einen biplanaren optischen Elementes (3) anliegt, und
wobei zwischen dem mindestens einen biplanaren optischen Element (3) und dem Bildsensor (5) ein Luftspalt (4) ausgebildet ist

Erfindungsgemäß wird bei einfachem und kostengünstigen Aufbau eine hohe Automotive-Tauglichkeit erreicht, wobei eine einfache Justage mit Fokussierung möglich ist. Die Kamera kann insbesondere für ein nicht-bildgcbcndcs Verfahren, z. B. als Spurwechsel-Warnkamera, eingesetzt werden.

## Beschreibung

Die Erfindung betrifft eine Kamera für ein Fahrzeug und ein Verfahren zum Justieren einer derartigen Kamera. Die Kamera kann insbesondere zur Überprüfung der Spurführung bzw. zur Detektion von Gefahren bei einem Spurwechsel, d.h. als Spurwechsel-Warnkamera, eingesetzt werden.

### Stand der Technik

Als Kameras werden an Fahrzeugen unter anderem Spurwechsel-Warnkameras bzw. Lane Departure Warning Cameras (LDWC) eingesetzt, die der Warnung des Fahrers bei einem Spurwechsel dienen. Als Spurwechsel wird hierbei ein Verlassen der Spur bezeichnet. Spurwechsel-Warnkameras weisen ein Objektiv (Lane Departure Warning Objective, LDWO) sowie einen Bildsensor auf, der ein Bildsignal zur nachfolgenden Datenverarbeitung ausgibt. Spurwechsel-Warnkameras dienen hierbei nicht der optischen Bildverarbeitung zur Ausgabe auf einen Bildschirm zur Information des Fahrers; sie haben jedoch einen Überwachungsbereich von wenigen Metern bis zu einigen zehn Metern, z. B. 50 m oder auch 100 m, zu überwachen, um mögliche Kollisionen beim Verlassen der Spur (Spurwechsel) oder nach dem Spurwechsel mit deutlich schnelleren oder deutlich langsameren Objekten zu erkennen.

Im Automotive-Bereich werden an Kameras, insbesondere auch an Spurwechsel-Warnkameras, hohe Stabilitätsanforderungen gestellt. So sind eine Lagerfähigkeit unter extremen Klimabedingungen, eine Stabilität gegenüber feuchter Wärme und eine hinreichend hohe Auflösung bei einem breiten spektralen Einsatzbereich erforderlich; dennoch sollen die Kameras kostengünstig hergestellt werden können.

### Offenbarung der Erfindung:

Die erfindungsgemäße Kamera weist einen robusten Aufbau aus einer genau einer Linse und mindestens einem biplanaren optischen Element auf, das mit einem Luftspalt vor dem Bildsensor befestigt ist. Das mindestens eine biplanare optische Element kann insbesondere eine Planplatte, aber auch z. B. ein Keil sein. Die Linse liegt erfindungsgemäß auf dem biplanaren optischen Element auf.

Es wird somit ein einlinsiges Lane Departure Warning Objektive mit mindestens einem biplanaren optischen Element geschaffen, wobei eine Fokussierung durch eine Längsverstellung dieses Objektives in axialer Richtung vor dem Bildsensor erfolgen kann. Somit ist ein einfacher Einsatz in dem Gehäuse bzw. in dem lens holder und eine Fokussierung axiales Verschieben und Fixierung der eingestellten axialen Länge möglich. Durch die feste Auflage der Linse auf dem optischen Element bzw. dem vorderen biplanaren optischen Element ist auch ohne Verwendung zusätzlicher Hilfsmittel bereits eine sichere Positionierung möglich, wobei ergänzend Abstandshalter zwischen entsprechenden Anlagebereichen der optischen Elemente vorgesehen sein können.

Die Linse ist mit einer konvexen Vorderfläche und konkaven Hinterfläche ausgebildet; ein radial äußerer Rand der konkaven Hinterfläche kann hierbei als Anlagefläche bzw. Anlagekante zur Anlage auf der Vorderseite des biplanaren optischen Elementes dienen. Hierbei kann diese Anlagefläche oder die Rückseite der Linse bereits als Blende wirken, so dass keine weitere Aperturblende erforderlich ist; es ist jedoch auch die zusätzliche Ausbildung einer mechanischen Aperturblende ohne Abstand bzw. im Abstand 0 mm möglich, deren Anordnung unabhängig von den optischen Flächen der Linse gewählt werden kann.

Am ersten Luft-Glasübergang, d. h. an der Vorderfläche der Linse, treten im Allgemeinen störende Streulichteffekte auf, die erfindungsgemäß jedoch durch Verwendung einer hinreichend dicken Planplatte bzw. zweier aufeinander folgenden Planplatten deutlich reduziert oder ganz eliminiert werden können.

Besondere Vorteile ergeben sich bei Einsatz der Kamera als Spurwechsel-Warnkamera, da das Objektiv (LDWO) einer Spurwechsel-Warnkamera nicht für visuelle Systeme eingesetzt wird; da die Kantendetektion auch mit einer gewissen Unschärfe noch hinreichend gut arbeitet, können 20 % MTF bei der halben Nyquist-Frequenz als ausreichend angesehen werden. Hierbei wird vorteilhafterweise ein LDWO mit 6 µm pixel pitch geschaffen, so dass die Nyquist-Frequenz sich zu 1/(6 µm x 2) = 83 lp/mm (Linienpaare/Millimeter) ergibt, so dass das Objektiv Ortsfrequenzen bis zur halben Nyquist-Frequenz von etwa 40 lp/mm deutlich abzubilden hat. Für höhere Ortsfrequenzen sollte die MTF erfindungsgemäß vorteilhafterweise stark abnehmen, um Aliasing-Effekte zu vermeiden.

Weiterhin sind auch andere Verwendungen der erfindungsgemäßen Kamera, insbesondere im Automotive-Bereich, möglich. Vorteilhaft sind hierbei Einsätze für nicht-visuelle bzw. nicht-bildgebende Verfahren, die der Detektion einer Situation oder des Zustandes des erfassten Bereichs dienen.

Gemäß einer bevorzugten Ausbildung ist der Raum zwischen der vorderen Linse und der Bildebene des Bildsensors zu mehr als der Hälfte mit den biplanaren optischen Elementen, z. B. Planplatten oder Keilen, ausgefüllt.

Erfindungsgemäß wird vorteilhafterweise das Kamera-Design, insbesondere bei Einsatz als Spurwechsel-Warnkamera, auf einen kleinen Farbquerfehler optimiert.

Die erfindungsgemäße Justage kann somit durch Aufsetzen der Linse auf das vordere biplanare optische Element erfolgen, woraufhin das so geschaffene Objektiv in axialer Richtung durch z. B. Einschrauben im lens holder fokussiert und anschließend fixiert wird.

### Kurze Beschreibung der Zeichnungen

Fig. 1 bis 11 eine erste Ausführungsform einer erfindungsgemäßen Kamera mit einem Objektiv aus einer Linse aus Mineralglas und einer Planplatte:
- Fig. 1: einen Axialschnitt entlang der optischen Achse;
- Fig. 2: die Darstellung der lateralen Aberrationen;
- Fig. 3: ein Spot-Diagramm der Kamera;
- Fig. 4: ein Diagramm des Farbquerfehlers;

Fig. 5 die Modulationsübertragungsfunktion (MTF) für 10, 20 und 40 lp/mm (Linienpaare pro mm);
- Fig. 6: die Modulationsübertragungsfunktion für 5, 10, 20 lp/mm;
- Fig. 7: die Verzeichnung in der Bildebene;
- Fig. 8: die relative Bestrahlungsstärke in Abhängigkeit des Feldwinkels;
- Fig. 9: die relative Transmission in Abhängigkeit des Feldwinkels;
- Fig. 10: ein 100 mm- Streifentarget in 5 m Entfernung;
- Fig. 11: ein 100 mm- Streifentarget in 50 m Entfernung;

Fig. 12 bis 22 eine zweite Ausführungsform mit einem Objektiv aus einer Linse aus Kunststoff und einer Planplatte:

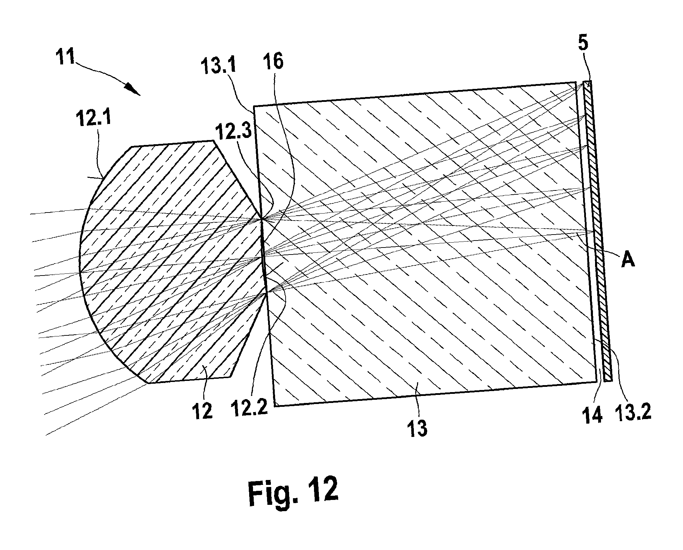

- Fig. 12: einen Axialschnitt entlang der optischen Achse;

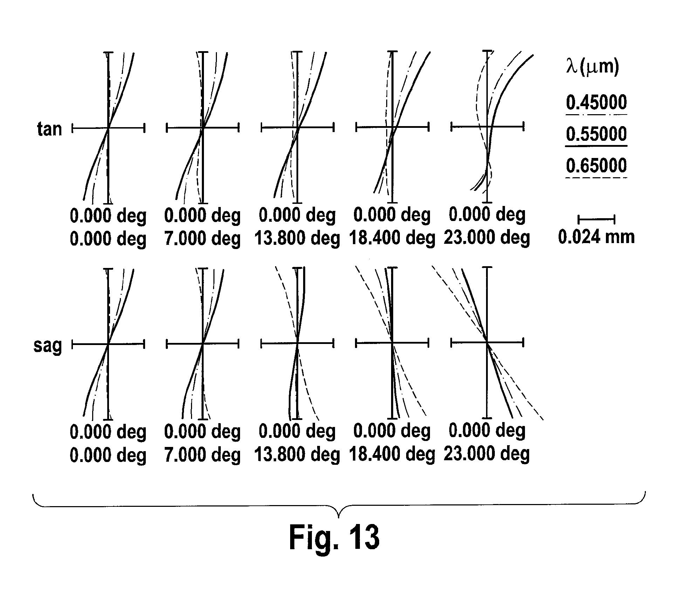

- Fig. 13: die Darstellung der lateralen Aberrationen;

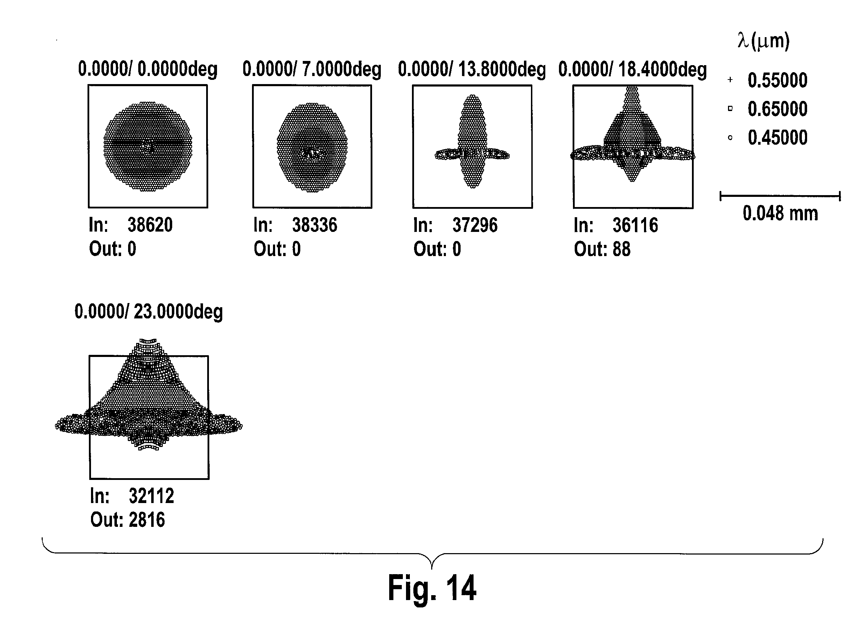

- Fig. 14: ein Spot-Diagramm der Kamera;

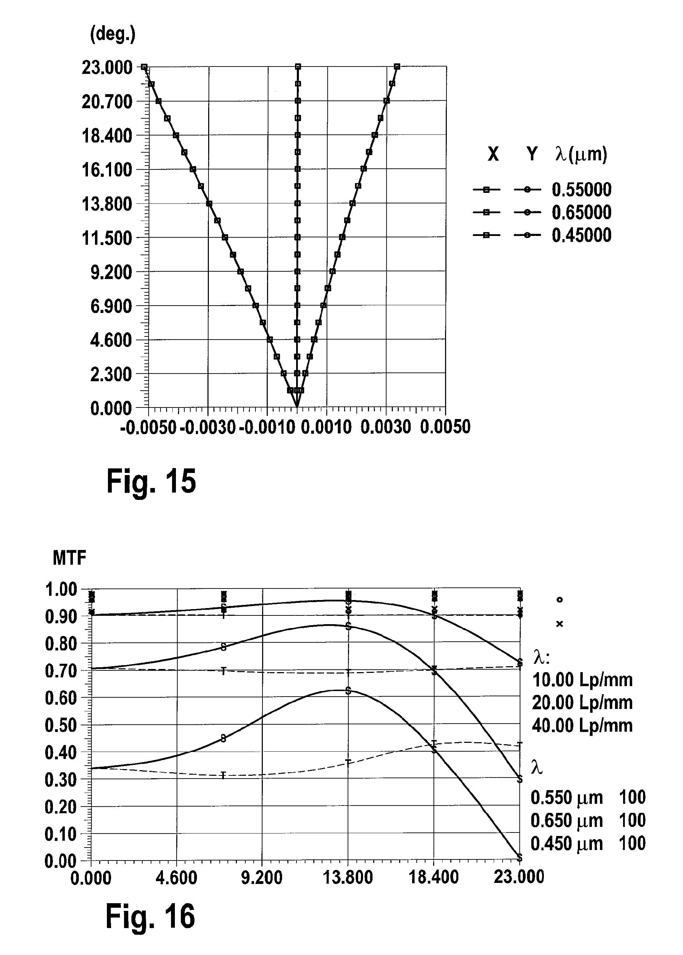

- Fig. 15: ein Diagramm des Farbquerfehlers;
- Fig. 16: die Modulationsübertragungsfunktion (MTF) für für 10, 20 und 40 lp/mm;

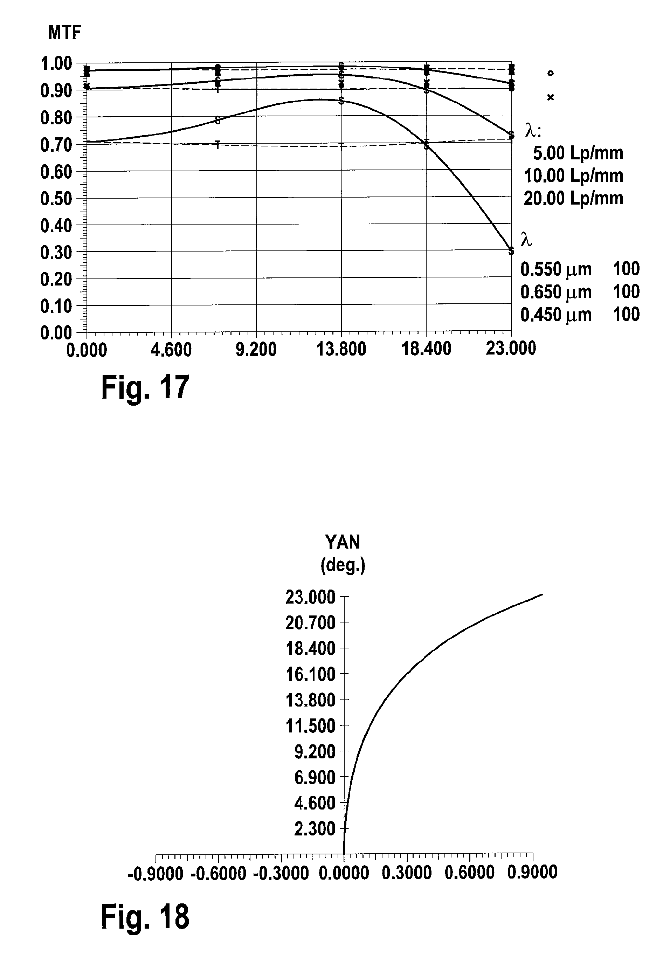

- Fig. 17: die Modulationsübertragungsfunktion für 5, 10, 20 lp/mm;
- Fig. 18: die Verzeichnung in der Bildebene;

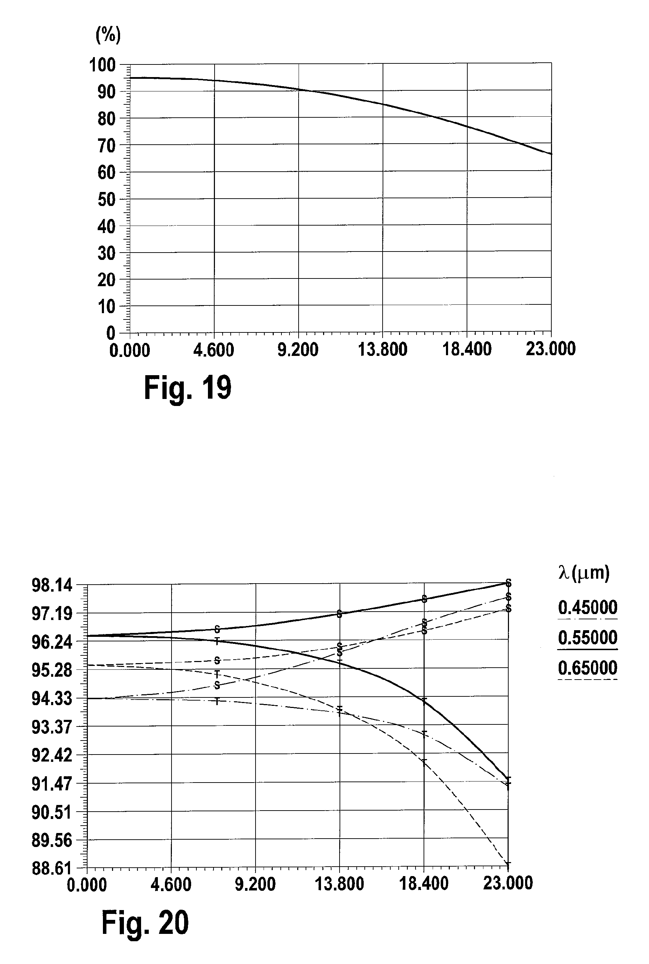

- Fig. 19: die relative Bestrahlungsstärke in Abhängigkeit des Feldwinkels;
- Fig. 20: die relative Transmission in Abhängigkeit des Feldwinkels;

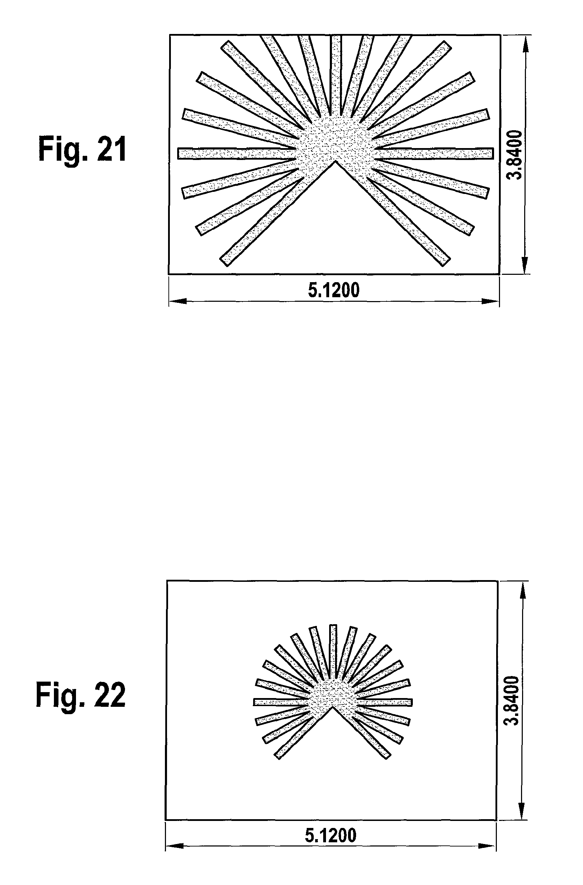

- Fig. 21: ein 100 mm- Streifentarget in 5 m Entfernung;

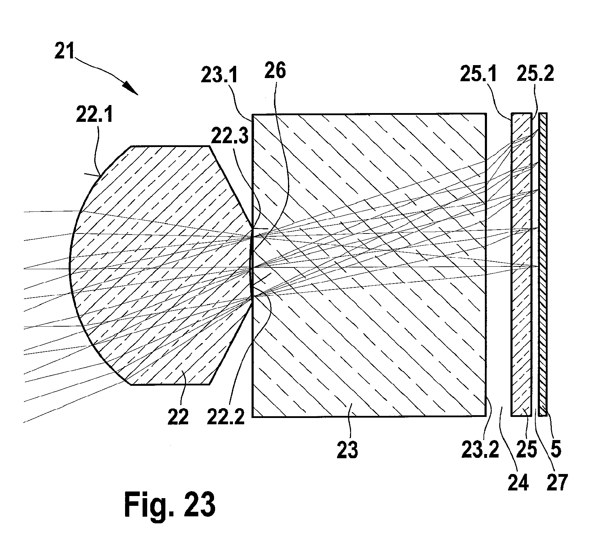

- Fig. 22: ein 100 mm-Streifentarget in 50 m Entfernung;

Fig. 23 bis 31 eine dritte Ausführungsform mit einem Objektiv aus einer sphärischen Linse aus Mineralglas und zwei Planplatten:
- Fig. 23: einen Axialschnitt entlang der optischen Achse;

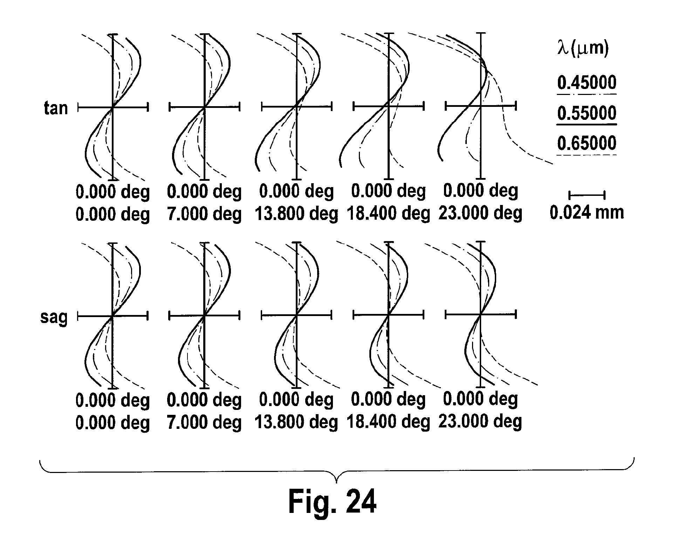

- Fig. 24: die Darstellung der lateralen Aberrationen;

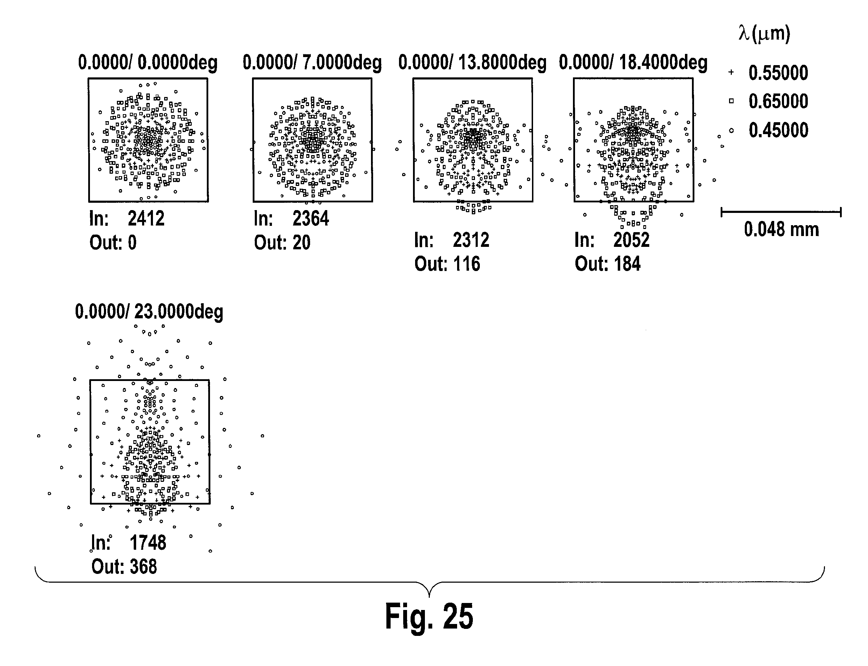

- Fig. 25: ein Spot-Diagramm der Kamera;

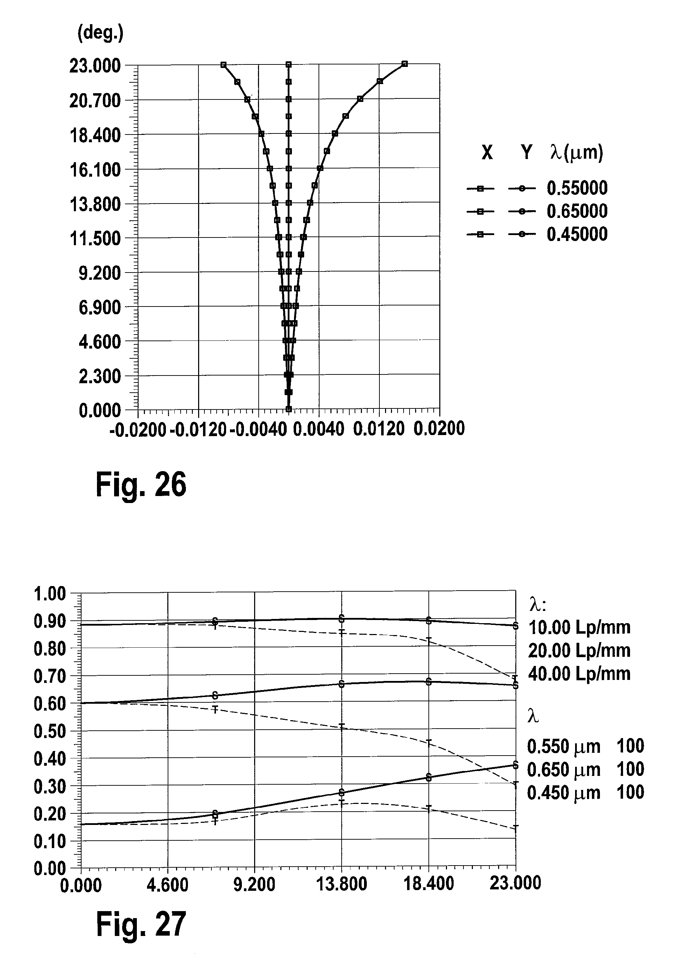

- Fig. 26: ein Diagramm des Farbquerfehlers;
- Fig. 27: die Modulationsübertragungsfunktion (MTF) für 10, 20 und 40 lp/mm;

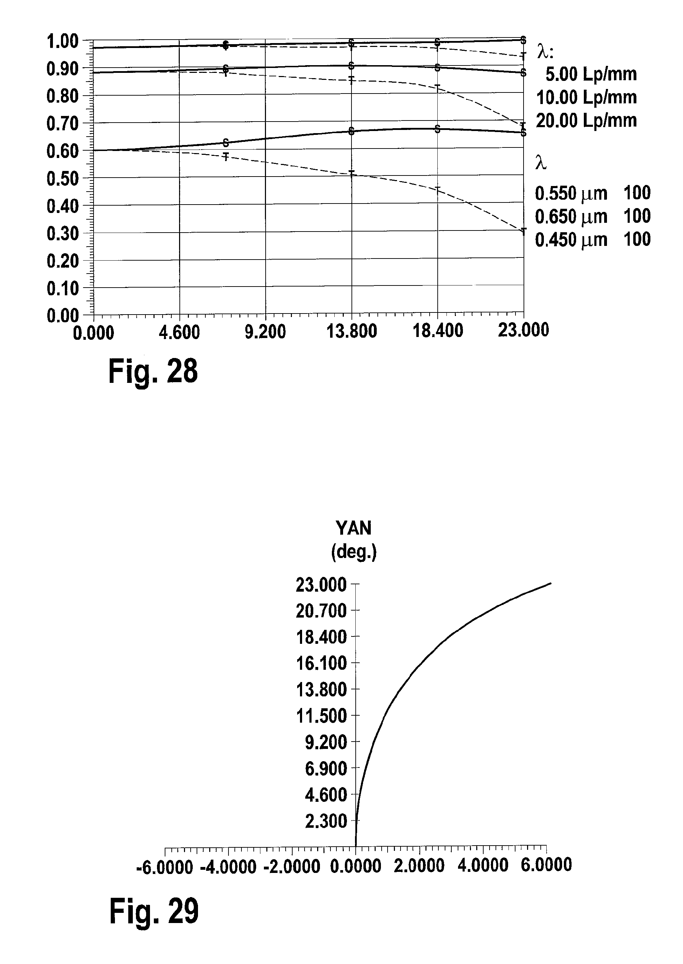

- Fig. 28: die Modulationsübertragungsfunktion für 5, 10, 20 lp/mm;
- Fig. 29: die Verzeichnung in der Bildebene;

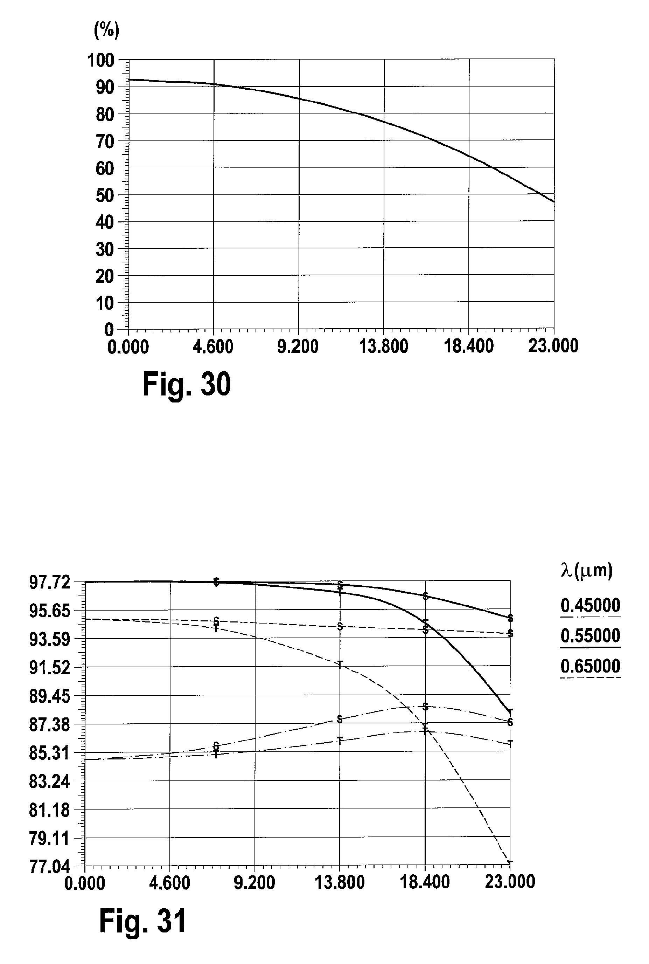

- Fig. 30: die relative Bestrahlungsstärke in Abhängigkeit des Feldwinkels;
- Fig. 31: die relative Transmission in Abhängigkeit des Feldwinkels;

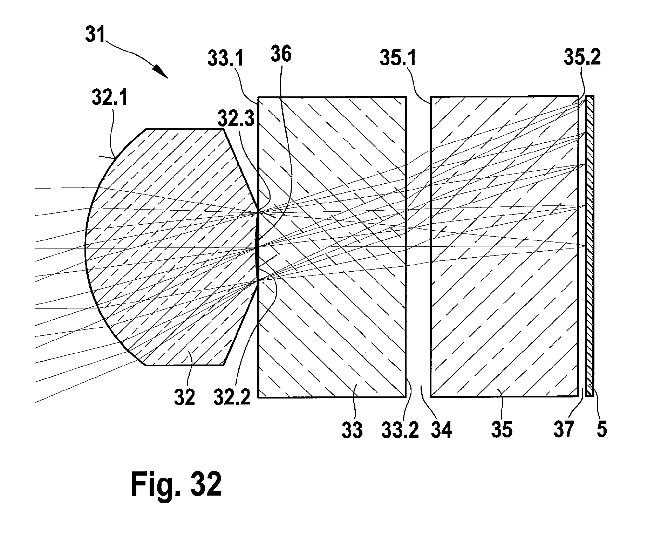

Fig. 32 bis 40 eine vierte Ausführungsform mit einem Objektiv aus einer asphärischen Linse aus Mineralglas und zwei Planplatten:
- Fig. 32: einen Axialschnitt entlang der optischen Achse;

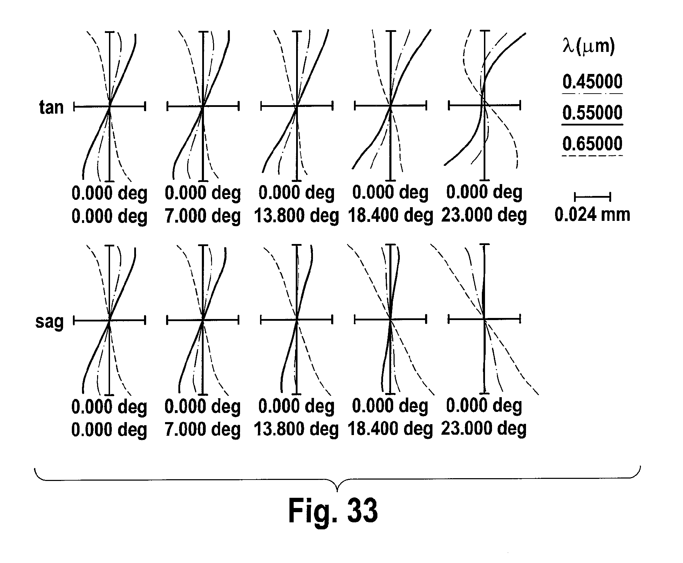

- Fig. 33: die Darstellung der lateralen Aberrationen;

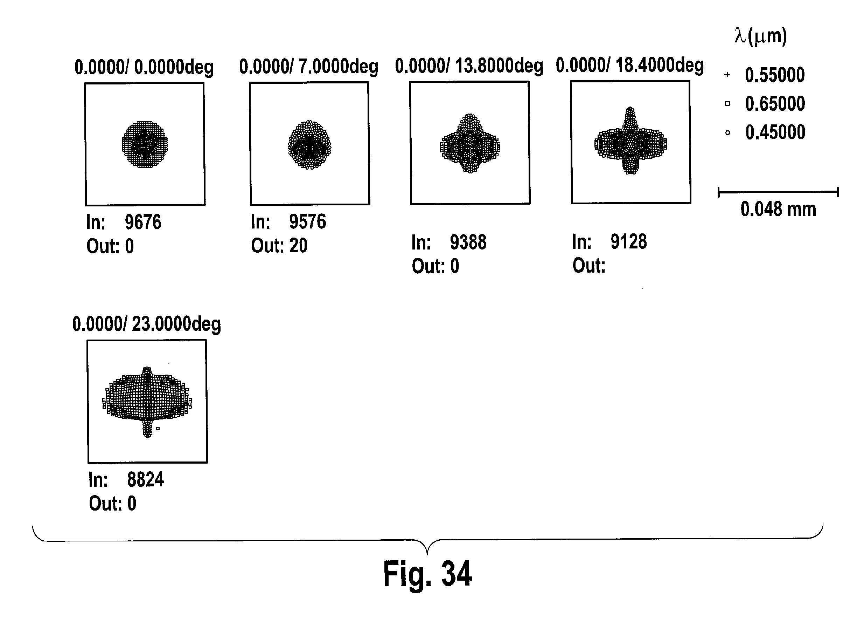

- Fig. 34: ein Spot-Diagramm der Kamera;

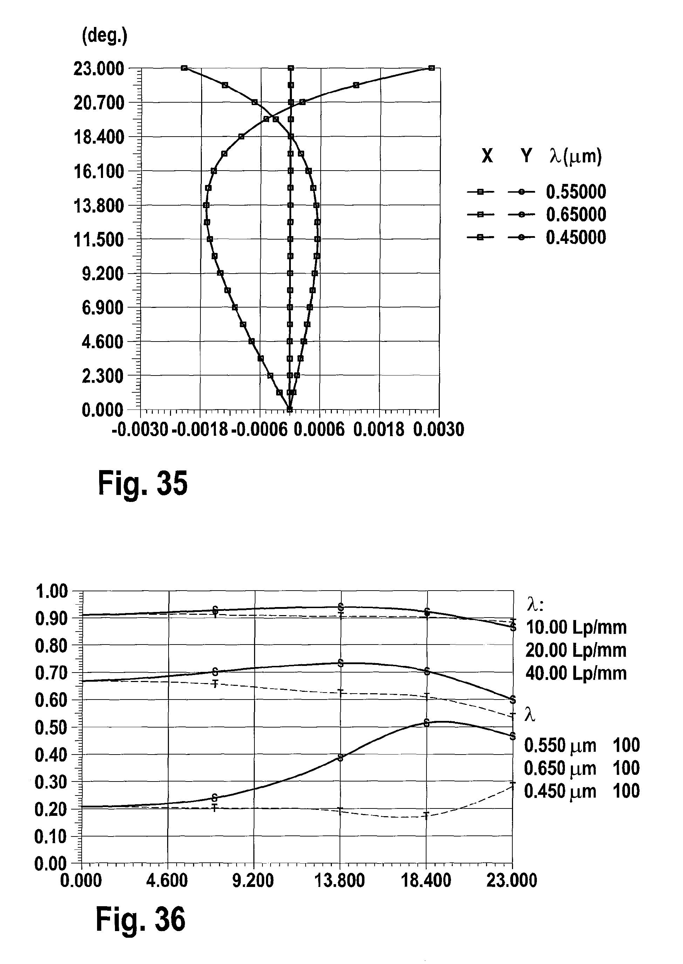

- Fig. 35: ein Diagramm des Farbquerfehlers;
- Fig. 36: die Modulationsübertragungsfunktion (MTF) für 10, 20 und 40 Linienpaare pro mm;

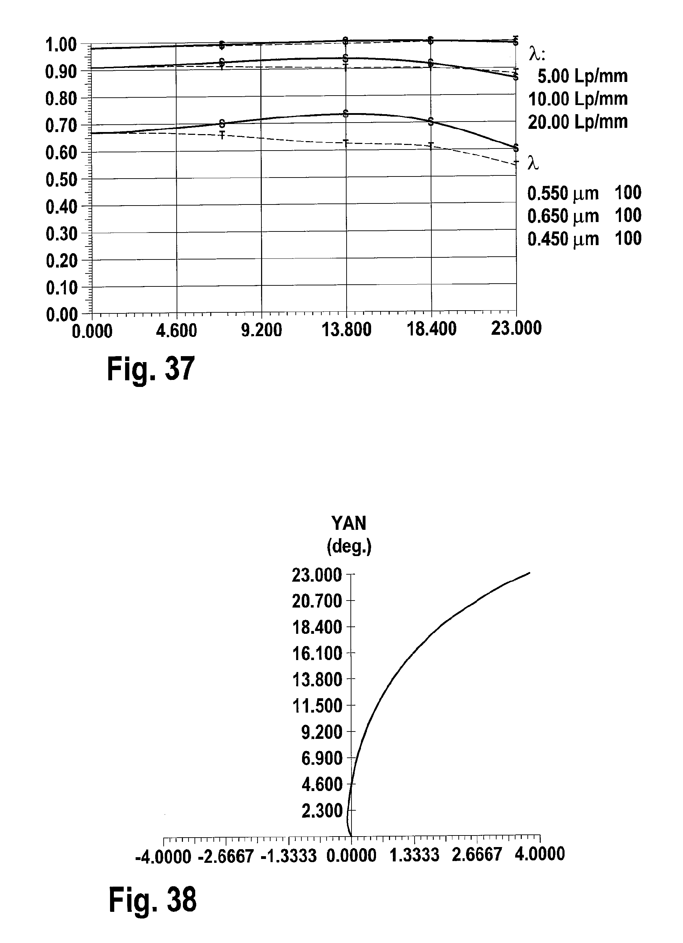

- Fig. 37: die Modulationsübertragungsfunktion für 5, 10, 20 lp/mm;
- Fig. 38: die Verzeichnung in der Bildebene;

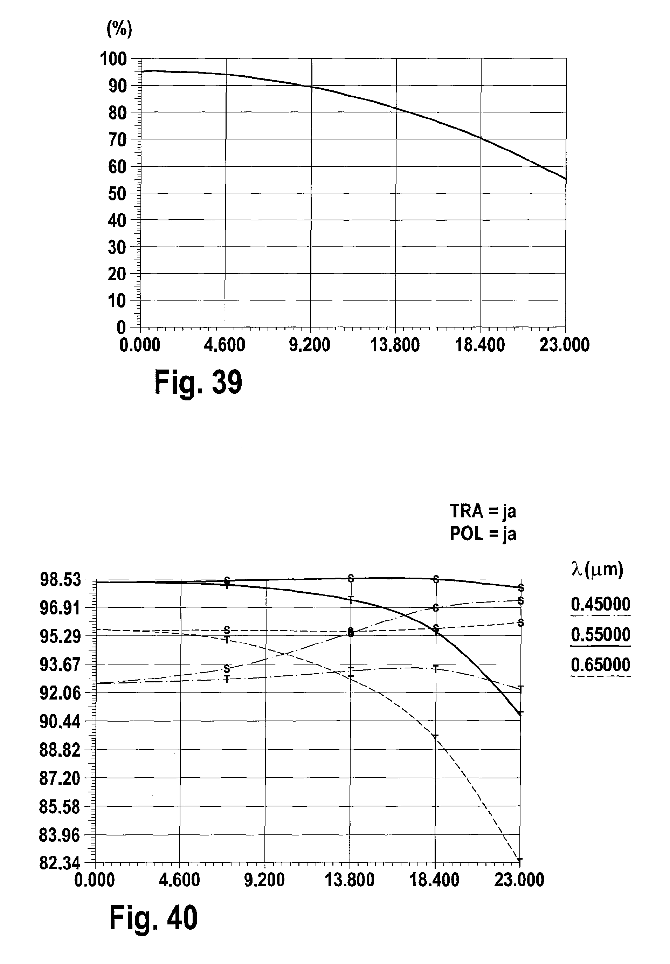

- Fig. 39: die relative Bestrahlungsstärke in Abhängigkeit des Feldwinkels; und
- Fig. 40: die relative Transmission in Abhängigkeit des Feldwinkels.

### Ausführungsformen der Erfindung

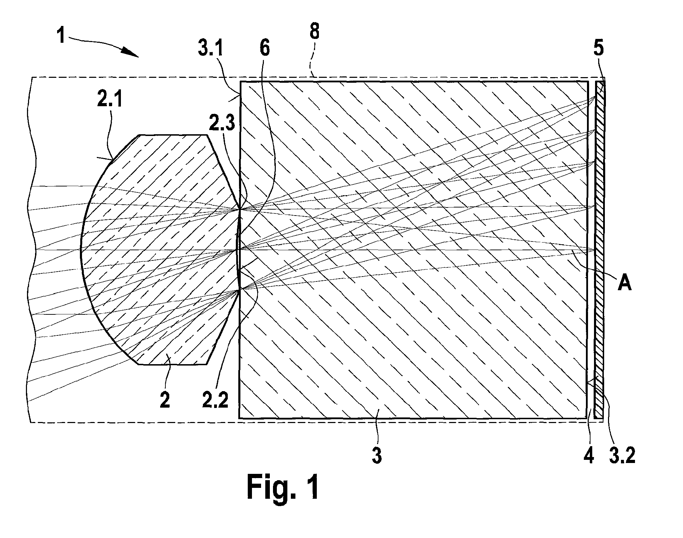

Die Figuren 1 bis 11 zeigen eine erste Ausführungsform einer Kamera als Spurwechsel-Warnkamera 1 (Lane Departure Warning Camera, LDWC) mit einer Linse 2, einer als Planplatte dienenden Glasplatte 3 und hinter der Glasplatte 3 über einen Luftspalt 4 beabstandet einen Bildsensor 5, wobei die Bauelemente 2, 3, 5 in einem Gehäuse 8 (lens holder) aufgenommen sind. Die Linse 2 weist eine gemäß unten stehender Tabelle 1 asphärische, konvexe Vorderfläche 2.1 und eine asphärische, konkave Hinterfläche bzw. hintere Linsenfläche 2.2 auf. Die Vorderfläche 3.1 und Hinterfläche 3.2 der Glasplatte 3 sowie die Bildebene des Bildsensors 5 sind planar. Somit ist auch der Luftspalt 4 biplanar ausgebildet. Die hintere Linsenfläche 2.2 wirkt hierbei als Blende.

Die Linse 2 liegt vorteilhafterweise mit einem radial äußeren, ringförmigen Rand 2.3 ihrer hinteren Linsenfläche 2.2 an der Vorderseite 3.1 der Glasplatte 3 an. In radialer Richtung innerhalb ihrer Anlagefläche (Anlagekante) 2.3 ist somit ein linsenförmiger bzw. konvex-planarer Lufspalt 6 zwischen der hinteren Linsenfläche 2.2 und der Vorderseite 3.1 der Glasplatte 3 ausgebildet.

Bei dieser Ausführungsform ist die Linse 2 aus einem blank pressbaren Glas, so dass die asphärischen Linsenflächen 2.1 und 2.2 relativ kostengünstig hergestellt werden können.

Hierbei kann insbesondere ein Mineralglas, z. B. das Mineralglas F2, verwendet werden. Das blank pressbare Mineralglas F2 ermöglicht zum einen eine kostengünstige Herstellung durch Warmformung und weiterhin eine Reduktion des Farbquerfehlers auf das für die Anwendung erforderliche Maß. Durch die Verwendung dieses Mineralglases ist die Automotivetauglichkeit, insbesondere ein Lagertemperaturbereich von -40 bis 120 °C und eine Stabilität gegenüber feuchter Wärme sowie eine hohe Abrasiv- bzw. Kratzfestigkeit gewährleistet.

Auch die Glasplatte (Glasslid) 3 ist vorteilhafterweise aus Mineralglas hergestellt. Bei dieser Ausführungsform wird eine Glasplatte 3 mit großer Dicke bzw. großer Axialerstreckung ausgewählt, wobei die axiale Dicke der Glasplatte 3 mindestens halb so groß, vorteilhafterweise aber etwa genau so groß wie ihre laterale Erstreckung orthogonal zur optischen Achse A ist.

Die Glasplatte 3 befindet sich in relativ geringem Abstand vor dem Bildsensor 5, d. h. der Luftspalt 4 ist relativ schmal; durch die Verwendung der dicken Glasplatte 3 wird der Einfluss der störenden Streulichteffekte, die am ersten Luft-Glas-Übergang, d.h. an der vorderen Linsenfläche 2.1 auftreten, reduziert.

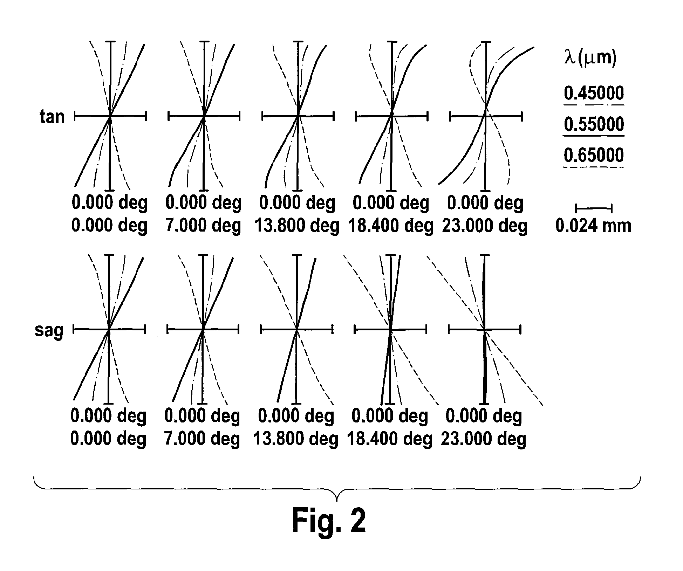

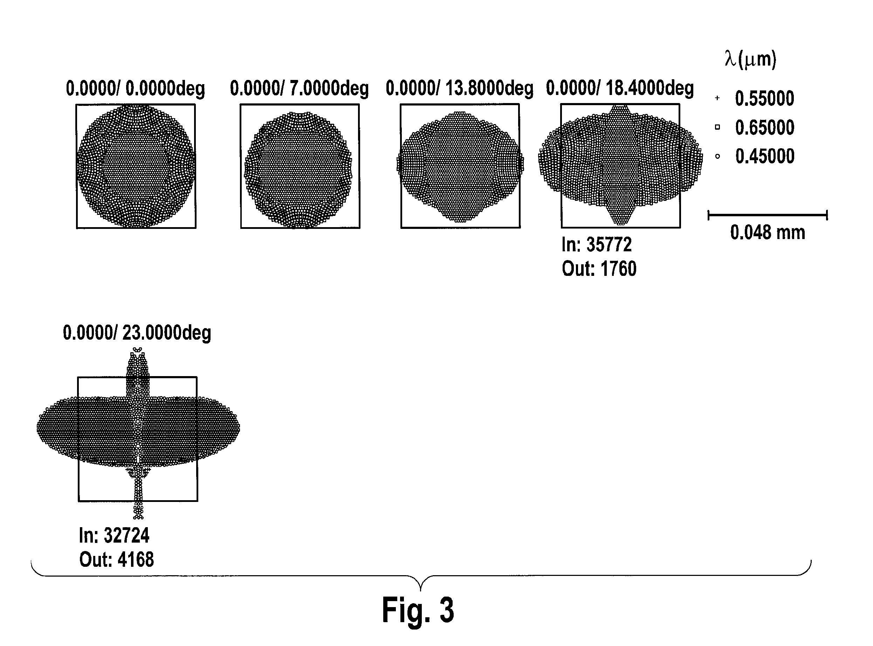

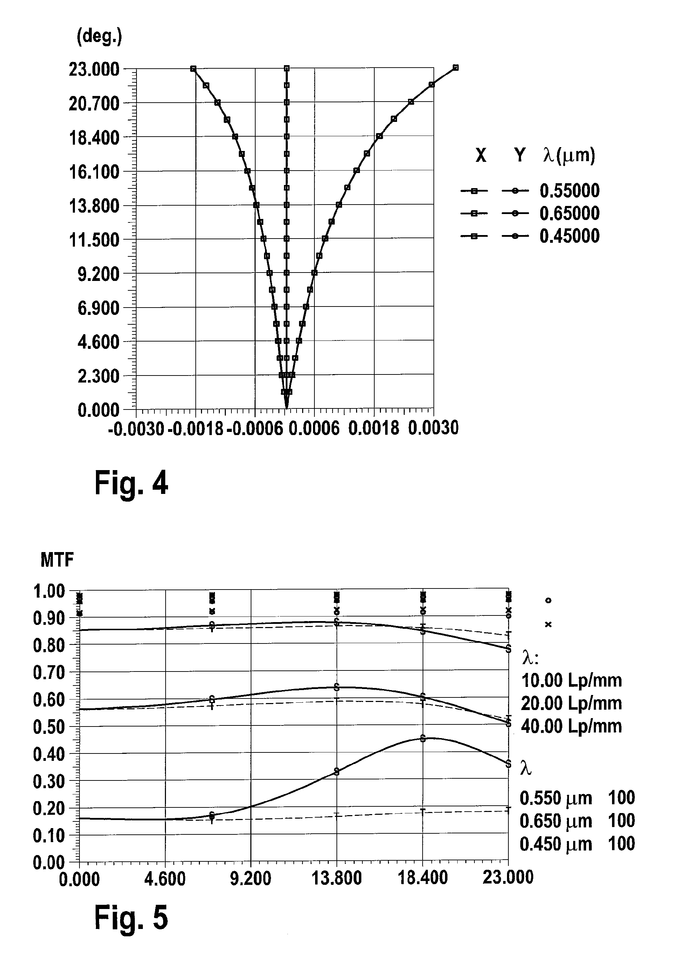

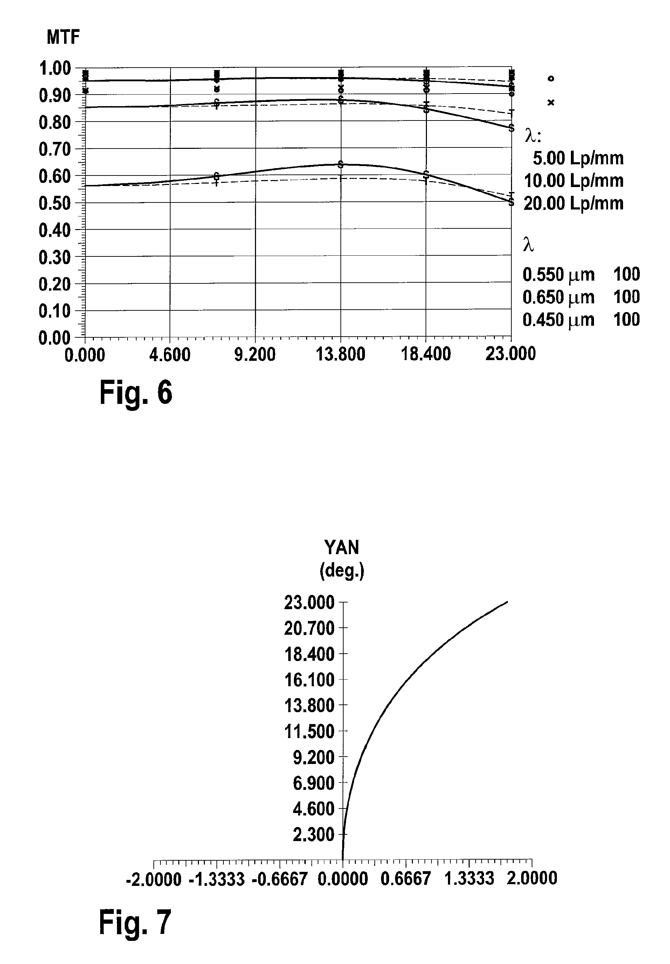

Bei einer vorteilhaften Ausbildung des Objektivs (LDWO) aus Linse 2 und Glasplatte 3 mit 6 µm pixel pitch ist die Nyquist-Frequenz zu 1/(6 µm x 2) = 83 lp/mm (Linienpaare pro Millimeter) vorgegeben, d. h. das Objektiv sollte Ortsfrequenzen bis zur halben Nyquist-Frequenz von etwa 40 lp/mm deutlich abbilden. Insbesondere bei einem Einsatz der erfindungsgemäßen Kamera für ein nicht-visuelles System, z. B. als Spurwechsel-Warnkamera, und da die Kantendetektion auch mit einer gewissen Unschärfe arbeitet, sollten 20 % MTF (Modulationsübertragungsfunktion) bei der halben Nyquist-Frequenz ausreichend sein. Gemäß den Figuren 5 und 6 sollten für höhere Ortsfrequenzen die MTF stark abnehmen, so dass erfindungsgemäß aliasing-Effekte vermieden werden können. Das erfindungsgemäße LDWO-Design ist auf einen kleinen Farbquerfehler optimiert, wie die Darstellung der lateralen Aberrationen in Fig. 2, die Darstellung des Farbquerfehlers in Figur 4 und das Spotdiagram der Fig. 3 zeigt.

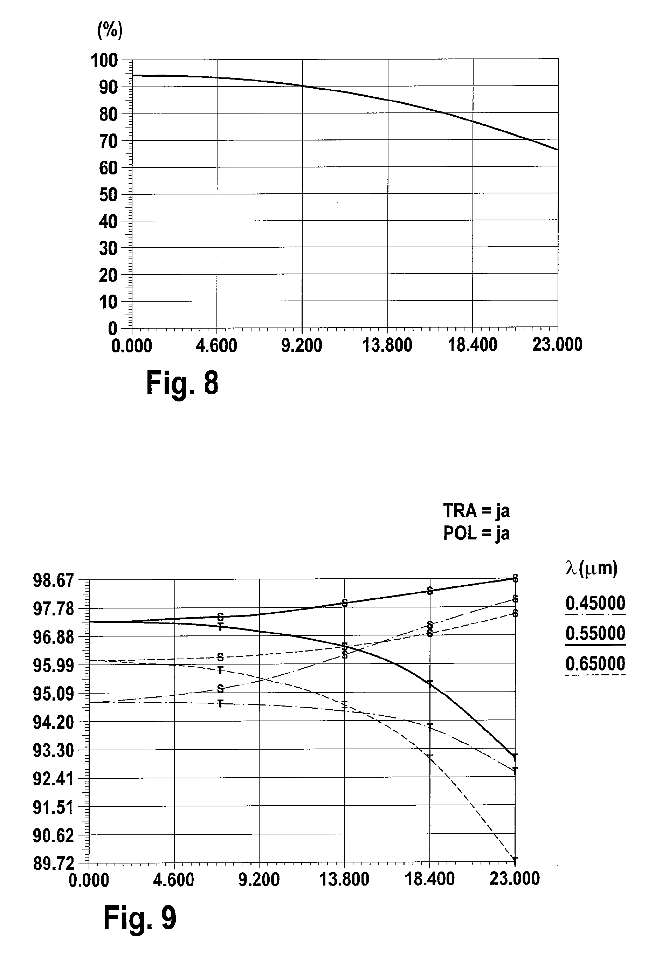

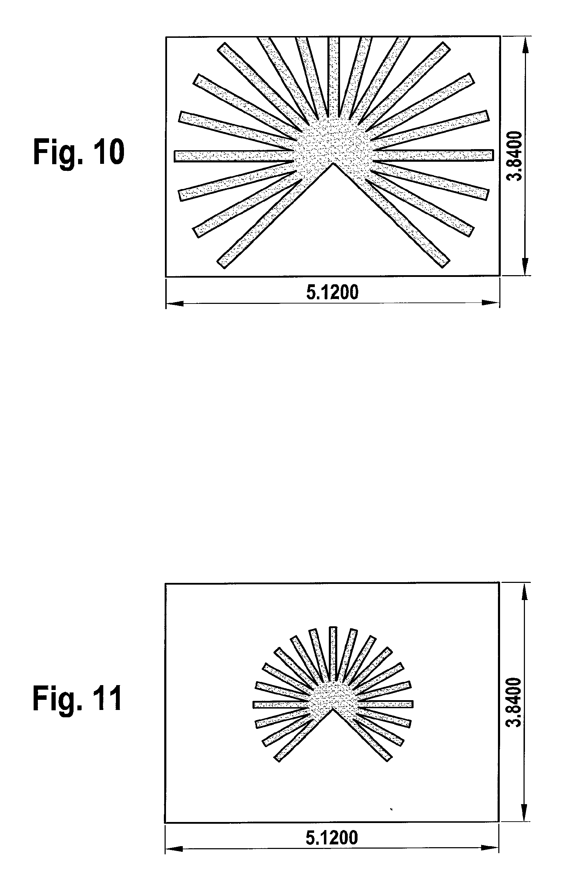

Gemäß der Darstellung der Verzeichnung in der Bildebene in Fig. 7 zeigt das Objektiv 2, 3 eine moderate Verzeichnung. Die gesamte Spurwechsel-Warnkamera 1 aus den drei Bauelementen 2, 3 und 5 arbeitet somit als full frame LDW-System, wobei gemäß der Darstellungen der relativen Bestrahlungsstärke über dem Feldwinkel aus Fig. 8 sowie der Transmission über dem Feldwinkel gemäß Fig. 9 das Bild in den Ecken etwas dunkler sein wird. In den Figuren 10 und 11 wurde zur Überprüfung der Abbildungsleistung die Abbildung einer Streifenstruktur mit 100 mm-Streifebreite für die Objektiventfernungen 5 m und 10 m simuliert, die Angaben erfolgen in mm.

Das Design der Kamera 1 ermöglicht eine sehr einfache Montage, indem die asphärische Linse 2 auf die Glasplatte 3 gelegt wird und die Fokussierung durch Verklebung der Glasplatte 3 mit dem Bildsensor 5 erfolgt.

**Tabelle 1**

| **Fläche** | **Radius** | **Abstand** | **Material** | Index | Halber Durchmesser |
|---|---|---|---|---|---|
| Objektiv | Unendlich | 100000 | | 1 | 4246,82 |
| 2.1 | 2,9538 | 2,97314 | F2 | 1,623655 | 2,24 |
| 2.2 | 5,6027 | 0,1 | | 1 | 0,76 |
| 3.1 | Unendlich | 6,47710 | F2 | 1,623655 | 3,30 |
| 3.2 | Unendlich | 0,145 | | 1 | 3,30 |
| 5 | Unendlich | | | 1 | 3,31 |

Die Tabellen geben jeweils einige Daten einer möglichen Ausbildung der betreffenden Ausführungsformen wieder, wobei die Angaben des Radius und Abstandes in mm erfolgen. Die erste Zeile gibt die Eigenschaften des gesamten Objektivs an, die nachfolgenden Zeilen beziehen sich auf die jeweils in der ersten Spalte angegebenen Flächen. Der Typ wird mit S für sphärisch und A für asphärisch bezeichnet. Plane Ebenen sind als sphärisch mit unendlichem Radius aufgeführt. Der Abstand ist auf die jeweils nächste (d.h. in der nachfolgenden Zeile aufgeführte) Ebene bezogen. wobei die Krümmungsradien der Linsenflächen in Abhängigkeit der Brechungsindizes der Materialen ausgewählt werden können.

Die Figuren 12 bis 22 zeigen ein zweite Ausführungsform einer Kamera 11, insbesondere als Spurwechsel-Warnkamera 11, deren Linse 12 - entsprechend der ersten Ausführungsform- eine konvex asphärische Vorderfläche 12.1 und eine konkav asphärische Hinterfläche 12.2 aufweist. Die Linse 12 liegt wiederum mit ihrer ringförmigen Anlagefläche 12.3 auf der Vorderseite 13.1 einer Glasplatte 13 an, deren plane Rückseite 13.2 über einen Luftspalt 14 von dem - gegenüber der ersten Ausführungsform unveränderten - Bildsensor 5 angeordnet ist. Somit wird wiederum zwischen der Linse 12 und der Planplatte 13 ein linsenförmiger Luftspalt 16 gebildet. Im Unterschied zur ersten Ausführungsform ist die Linse 12 aus einem Kunststoff, vorzugsweise aus einem blank pressbaren Kunststoff, z. B. COC, hergestellt. Die Glasplatte 13 kann gegenüber der Glasplatte 3 der ersten Ausführungsform unverändert sein. Das Kunststoffmaterial der Linse 12 ermöglicht wiederum eine kostengünstige Herstellung durch Warmformung, wobei auch dieser Kunststoff einen Lagertemperaturbereich von -40 bis 120 °C und eine Stabilität gegenüber feuchter Wärme gewährleistet. In den Figuren - auch der weiteren Ausführungsformen - sind ansonsten die Angaben der ersten Ausführungsform entsprechend anzusetzen; auch in Fig. 21, 22 erfolgen die Angaben in mm.

Die Nyquist-Frequenz ist gegenüber der ersten Ausführungsform unverändert 83 lp/mm, wobei auch die weiteren zu der ersten Ausführungsform angegebenen Daten über die Modulationsübertragungsfunktion MTF und die Nyquist-Frequenz entsprechend übernommen werden können. Die Figuren 13 bis 21 geben die entsprechenden Eigenschaften entsprechend der Figuren 2 bis 11 der ersten Ausführungsform wieder.

Tabelle 2 gibt entsprechend Daten einer möglichen Ausführungsform wieder, wobei der Kunststoff COC, z. B. einen Index von 1,535726 hat; als Glasplatte 13 kann unverändert das Mineralglas F2 mit einem Brechungsindex 1,623655 verwendet werden. Die hintere Linsenfläche 12.2 wirkt als Blende.

**Tabelle 2**

| **Fläche** | **Typ** | **Radius** | **Abstand** | *Material* | *Index* | Halber Durchmesser |
|---|---|---|---|---|---|---|
| Objektiv | S | Unendlich | 100000 | | 1 | 4246,37 |
| 12.1 | A | 3,0308 | 3,51907 | COC | 1,535726 | 2,33 |
| 12.2 | A | 9,4011 | 0,1 | | 1 | 0,74 |
| 13.1 | S | Unendlich | 6,23945 | F2 | 1,623655 | 0,79 |
| 13.2 | S | Unendlich | 0,145 | | 1 | 2,89 |
| 5 | S | Unendlich | | | 1 | 2,97 |

Die Figuren 23 bis 31 zeigen eine dritte Ausführungsform einer Kamera 21, insbesondere als Spurwechsel-Warnkamera 21, die gemäß Fig. 23 eine Linse 22 mit sphärischer, konvexer Vorderfläche 22.1 und sphärischer, konkaver Hinterfläche 22.2 aufweist, die mit ihrer die Hinterfläche 22.2 umgebenden, ringförmigen Anlagefläche 22.3 unter Ausbildung eines Luftspalts 26 wiederum an der Vorderseite 23.1 einer biplanaren Glasplatte 23 anliegt. Im Unterschied zu den beiden ersten Ausführungsformen ist zwischen der Hinterseite 23.2 der ersten Glasplatte 23 und dem Bildsensor 5 eine zweite Glasplatte 25 mit planarer Vorderseite 25.1 und planarer Rückseite 25.2 vorgesehen. Somit ist ein biplanarer Luftspalt 24 zwischen den beiden Glasplatten 23, 25 und ein weitere biplanarer Luftspalt 27 zwischen der Rückseite 25.2 der zweiten Glasplatte 25 und dem Bildsensor 5 vorgesehen.

Bei dieser Ausführungsform sind sämtliche optischen Elemente 22, 23 und 25 bzw. das gesamte Objektiv 22, 23, 25 aus einem Mineralglas bzw. verschiedenen Mineralgläsern hergestellt, so dass gemäß den obigen Ausführungen zur Ausführungsform 1 auch hier eine hohe Automotivtauglichkeit mit einem Lagertemperaturbereich von -40 bis 120 °C, eine Stabilität gegenüber feuchter Wärme und eine hohe Abrasivfestigkeit bzw. Kratzfestigkeit erreicht wird. Durch den Einsatz von zwei biplanaren Glasplatten 23, 25 können an der Linse 22 sehr kostengünstig herstellbare sphärische Flächen 22.1, 22.2 ausgebildet werden, so dass trotz Verwendung eines Mineralglases für die Linse 22 eine kostengünstige Herstellung der gesamten Anordnung möglich ist. Die zweite Glasplatte 25 ist dünner als die erste Glasplatte 23 und dient bei dieser Ausführungsform als Schutzglas (Glasslid), d.h. insbesondere Staubschutz, unmittelbar vor dem Bildsensor (Chip) 5.

Auch bei dieser Ausführungsform wird ein LDWO mit 6 µm pixel pitch und somit einer Nyquist-Frequenz von 1/(6 µm x 2) = 83 lp/mm erreicht, wobei die zu der ersten Ausführungsform angegebenen Daten bezüglich der Modulationsübertragungsfunktion wiederum zu übernehmen sind. Auch bei dieser Ausführungsform werden 20 Prozent Modulationsübertragungsfunktion (MTF) bei der halben Nyquist-Frequenz als ausreichend angesehen, wobei für höhere Ortsfrequenzen die MTF gemäß Fig. 27, 28 stark abnimmt, um aliasing-Effekte zu vermeiden. Auch diese Kamera 21 arbeitet als full frame LDW-System, wobei das Bild in den Ecken gemäß Fig. 30 etwas dunkler sein wird.

Das Design erlaubt eine sehr konventionelle Justage: Hierbei wird die sphärische Linse 22 zusammen mit der ersten, dicken biplanaren Glasplatte 23 als Objektiv verwendet, das zur Fokussierung in das gestrichelt eingezeichnete Gehäuse 6 (lens holder) eingeschraubt wird. Da der Luftspalt 27 konstant bleibt, kann zwischen der zweiten Glasplatte 25 und dem Bildsensor 5 ein Abstandshalter, z. B. durch Klebung, fest angebracht sein.

Gemäß Tabelle 3 sind sämtliche Flächen sphärisch bzw. plan (d. h. sphärisch mit unendlichem Radius). Hierbei kann gemäß der Tabelle z. B. als Glasmaterial der Linse 22 das Mineralglas NBASF 64 mit Brechungsindex 1,707794, als Glasmaterial der ersten Glasplatte 23 das Glasmaterial NLASF 46 mit Brechungsindex 1,90742 und als Glasmaterial der zweiten Glasplatte 25 das Mineralglas SF 66 mit Brechungsindex 1,932143 verwendet werden.

**Tabelle 3**

| **Fläche** | **Radius** | *Abstand* | *Material* | Index | Halber Durchmesser |
|---|---|---|---|---|---|
| Objektiv | Unendlich | 100000 | | 1 | 4246,30 |
| 22.1 | 3,0797 | 3,48051 | N-BASF64 | 1,707794 | 2,50 |
| 22.2 | 4,8532 | 0,06222 | | 1 | 0,71 |
| Blende | Unendlich | 0 | | 1 | 0,62 |
| 23.1 | Unendlich | 4,55442 | N-LASF46 | 1,907402 | 3,1 |
| 23.2 | Unendlich | 0,5 | | 1 | 3,100 |
| 25.1 | Unendlich | 0,4 | SF66 | 1,932143 | 3,10 |
| 25.2 | Unendlich | 0,145 | | 1 | 3,10 |
| 5 | Unendlich | | | 1 | 3,07 |

Die Figuren 32 bis 40 zeigen eine vierte Ausführungsform einer Kamera, insbesondere als Spurwechsel-Warnkamera 31, mit einem einlinsigen LDWO (Lane Departure Warning Objective), das wiederum eine Linse 32 mit einer asphärischen, konvexen Vorderfläche 32.1 und einer asphärischen, konkaven Hinterfläche 32.2 aufweist, wobei der ringförmige äußere Rand der asphärischen Hinterfläche 32.2 durch die Anlagefläche 32.3 der Linse 32 an der ersten Glasplatte 33 gebildet wird. Auch diese Ausführungsform weist - wie die dritte Ausführungsform - zwei biplanare Glasplatten 33, 35 auf, zwischen denen wiederum ein vorderer bzw. erster, biplanarer Luftspalt 34 ausgebildet ist, wobei die zweite Glasplatte 35 wiederum von dem Bildsensor 5 durch einen zweiten, festen Luftspalt 37 getrennt ist. Die beiden Glasplatten 33, 35 können baugleich gewählt werden, wodurch eine deutliche Kostenreduktion möglich ist.

Bei dieser Ausführungsform sind die Linsenflächen 32.1 und 32.2 gemäß Tabelle 4 asphärisch ausgebildet, wobei sämtliche optischen Elemente 32, 33, 35 aus Mineralgläsern hergestellt werden können. Als Mineralglas der ersten Linse 32 kann wiederum das blank pressbare Mineralglas F2 mit dem Berechnungsindex 1,623655 verwendet werden, als Mineralglas für die Glasplatten 34 und 35 z. B. SF6 mit dem Berechnungsindex 1,811858.

Auch bei dieser Ausführungsform wird durch die Verwendung der dicken Glasplatte 33 der Einfluss störender Streulichteffekte des ersten Luft-Glasübergangs reduziert. Die optischen Eigenschaften und Vorgaben bezüglich der Nyquist-Frequenz und der Modulationsübertragungsfunktion entsprechen denjenigen der ersten drei Ausführungsformen, wie auch den Figuren 36 und 37 mit der Modulationsübertragungsfunktion sowie der Fig. 35 mit dem Farbquerfehler, sowie der Fig. 34 mit dem Spot-Diagramm und der Fig. 33 mit dem lateralen Aberrationen zu entnehmen ist.

**Tabelle 4**

| **Fläche** | **Radius** | *Abstand* | **Material** | Index | Halber Durchmesser |
|---|---|---|---|---|---|
| Objektiv | Unendlich | 100000 | | 1 | 4246,30 |
| 32.1 | 3,0121 | 335938 | SF6 | 1,623655 | 2,50 |
| 32.2 | 5,5534 | 0,05992 | | 1 | 0,71 |
| Blende | Unendlich | 0 | | 1 | 0,71 |
| 33.1 | Unendlich | 2,93998 | SF6 | 1,811858 | 3,10 |
| 33.2 | Unendlich | 0,5 | | 1 | 3,10 |
| 35.1 | Unendlich | 2,93998 | SF6 | 1, 811858 | 3,10 |
| 35.2 | Unendlich | 0,145 | | 1 | 3,10 |
| 5 | Unendlich | | | 1 | 3,07 |

Das System zeigt eine merkliche Verzeichnung, wie Fig. 38 zu entnehmen ist, wobei das gesamte System bzw. die Kamera 31 wiederum als full frame LDW-Sytem dient, wobei das Bild gemäß Fig. 39 wiederum in den Ecken etwas dunkler sein wird. Auch bei dieser Ausführungsform wird - wie bei der dritten Ausführungsform - die Linse 32 zusammen mit der ersten Glasplatte 33 als Objektiv in das Gehäuse 6 bzw. den lens holder eingeschraubt.

## Patentansprüche

1. Kamera für ein Fahrzeug, die aufweist:
genau eine Linse (2, 12, 22, 32) mit einer konvexen Vorderfläche (2.1, 12.1, 22.1, 32.1) und einer konkaven Hinterfläche (2.2, 12.2, 22.2, 32.2),
mindestens ein biplanares optisches Element (3, 13, 23, 25, 33, 35) mit einer planaren Vorderseite (3.1, 13.1, 23.1, 25.1, 33.1, 35.1) und einer planaren Hinterseite (3.2, 13.2, 23.2, 25.2, 33.2, 35.2),
einen Bildsensor (5) zur Ausgabe eines Bildsignals (B), und
ein Gehäuse (6) zur Aufnahme der Linse (2, 12, 22, 32), des mindestens einen biplanaren optischen Elementes (3, 13, 23, 25, 33, 35) und des Bildsensors (5),
wobei eine Anlagefläche (2.3, 12.3, 22.3, 32.3) der Rückseite der Linse (2, 12, 22, 32) an der Vorderseite (3.1, 13.1, 23.1, 33.1) des mindestens einen biplanaren optischen Elementes (3, 13, 23, 33) anliegt, und
wobei zwischen dem mindestens einen biplanaren optischen Element (3, 13, 23, 25, 33, 35) und dem Bildsensor (5) ein Luftspalt (4) ausgebildet ist.

2. Kamera nach Anspruch 1, **dadurch gekennzeichnet, dass** der Raum zwischen der Linse (2, 12, 22, 32) und dem Bildsensor (5) zu mehr als der Hälfte mit ein oder mehreren biplanaren optischen Elementen (3, 13, 23, 25, 33, 35) ausgefüllt ist.

3. Kamera nach Anspruch 2, **dadurch gekennzeichnet, dass** als biplanares optisches Element genau eine Planplatte (3, 13) zwischen der Linse (2, 12) und dem Bildsensor (5) vorgesehen ist.

4. Kamera nach Anspruch 3, **dadurch gekennzeichnet, dass** die Planplatte (3, 13) eine axiale Dicke aufweist, die mindestens die Hälfte der lateralen Breite senkrecht zur optischen Achse (A) beträgt.

5. Kamera nach Anspruch 3 oder 4, **dadurch gekennzeichnet, dass** die Linse (2) aus einem Mineralglas hergestellt ist und zwei asphärische Linsenflächen (2.1, 2.2) aufweist.

6. Kamera nach Anspruch 3 oder 4, **dadurch gekennzeichnet, dass** die Linse (12) aus einem Kunststoffmaterial hergestellt ist und zwei asphärische Linsenflächen (12.1, 12.2) aufweist.

7. Kamera nach Anspruch 1 oder 2, **dadurch gekennzeichnet, dass**
als biplanare optische Elemente zwischen der Linse (22, 32) und dem Bildsensor (5) genau zwei Planplatten (23, 25; 33, 35) vorgesehen sind,
die Linse (22, 32) mit ihrer Anlagefläche (22.3, 32.3) an der Vorderseite (23.1, 33.1) der vorderen Planplatte (23, 33) anliegt, und
zwischen den Planplatten (23, 25; 33, 35) ein vorderer Luftspalt (24, 34) und zwischen der hinteren zweiten Planplatte (25, 35) und dem Bildsensor (5) ein hinterer Luftspalt (27, 37) ausgebildet ist.

8. Kamera nach Anspruch 7, **dadurch gekennzeichnet, dass**
die vordere erste Planplatte (23, 33) eine größere axiale Dicke aufweist als die hintere zweite Planplatte (25),
die Linse (22) aus einem Mineralglas hergestellt ist und ihre Linsenflächen (22.1, 22.2) sphärisch ausgebildet sind.

9. Kamera nach Anspruch 7, **dadurch gekennzeichnet, dass**
die Planplatten (33, 35) gleich ausgebildet sind, und
die Linse (32) aus einem Mineralglas hergestellt ist und ihre Linsenflächen (32.1, 32.2) asphärisch ausgebildet sind.

10. Kamera nach einem der vorherigen Ansprüche, **dadurch gekennzeichnet, dass** das mindestens eine biplanare optische Element (3, 13, 23, 25, 33, 35) aus einem Mineralglas hergestellt ist.

11. Kamera nach einem der vorherigen Ansprüche, **dadurch gekennzeichnet, dass** der Bildsensor (5) an der Rückseite (3.2, 13.2, 25.2, 35.2) des einen biplanaren optischen Elementes (3, 13) oder des hinteren biplanaren optischen Elementes (25, 35) mit einem festen Luftspalt (4, 14, 27, 37) befestigt ist.

12. Kamera nach einem der vorherigen Ansprüche, **dadurch gekennzeichnet, dass** die Anlagefläche (2.3, 12.3, 22.3, 32.3) der Linse (2, 12, 22, 32) als Aperturblende wirkt.

13. Kamera nach einem der Ansprüche 1 bis 11, **dadurch gekennzeichnet, dass** an der Rückseite der Linse (2, 12, 22, 32) und ohne Abstand zu der Rückseite der Linse (2, 12, 22, 32) eine Aperturblende vorgesehen ist.

14. Verwendung der Kamera nach einem der vorherigen Ansprüche für ein nichtbildgebendes Verfahren, z. B. als Spurwechsel-Warnkamera.

15. Verfahren zum Justieren der Kamera nach einem der Ansprüche 1 bis 13, bei dem
die Linse (2, 12, 22, 32) mit ihrer Anlagefläche (2.3, 12.3, 22.3, 32.3) auf die Vorderseite (3.1, 13.1, 23.1, 33.1) des vorderen biplanaren optisches Elementes (3, 13, 23, 25, 33, 35) gesetzt wird, wodurch ein Objektiv gebildet wird, der Abstand des Objektivs (2, 3; 12, 13; 22, 23; 32, 33) vor dem Bildsensor (5) oder einem mit dem Bildsensor (5) verbundenen hinteren biplanaren optischen Element (25, 35) unter Einstellung einer Fokussierung verändert wird, und
das Objektiv (2, 3; 12, 13; 22, 23; 32, 33) daraufhin in dem Gehäuse (6) fixiert wird.
